# EUROPÄISCHE PATENTSCHRIFT

(11) **EP 1 188 394 B1**
(45) Veröffentlichungstag und Bekanntmachung des Hinweises auf die Patenterteilung: **28.09.2005**
(21) Anmeldenummer: 01890262.7
(22) Anmeldetag: 11.09.2001
(51) Int. Cl.: A46B 17/08, A46B 5/02

(54) **Zahnbürste**
Toothbrush
Brosse à dents

(30) Priorität: 13.09.2000 US 661020
(43) Veröffentlichungstag der Anmeldung: 20.03.2002
(73) Patentinhaber: Bamed AG, 8852 Altendorf (CH)
(72) Erfinder: Röhrig, Peter, 1160 Wien (AT)
(74) Vertreter: Weinzinger, Arnulf

(56) Entgegenhaltungen:
- WO-A-01/26505
- CA-A- 2 212 398
- DE-U- 8 620 945
- GB-A- 365 706

## Beschreibung

Die Erfindung betrifft eine Zahnbürste mit einem Griff, an dessen einem Ende ein Borstenteil zum Reinigen der Zähne und an dessen dem Borstenteil gegenüberliegenden Ende ein Massageteil vorgesehen ist.

In der Regel weisen Zahnbürsten in einem Endbereich eines Griffes einen Borstenteil auf, der zum Reinigen der Zähne und darüber hinaus auch zum Massieren des Zahnfleisches vorgesehen ist. Da die Borsten jedoch vor allem auch im relativ empfindlichen Übergangsbereich zwischen Zähnen und Zahnfleisch zur Anwendung kommen, sind sie relativ weich, um keine Verletzungen des Zahnfleisches in diesem Bereich hervorzurufen. Daher ist es bereits bekannt, am dem Borstenteil gegenüberliegenden Ende des Griffes einen Massageteil vorzusehen, der ausschließlich zur Massage des Zahnfleisches dient und keine das Zahnfleisch gefährdende Borsten aufweist.

Aus der DE 40 29 719 A1 ist eine Zahnbürste bekannt, bei der am dem Borstenteil gegenüberliegenden Ende des Griffes einer von mehreren Zusatzteilen mit verschieden geformten Massageteilen angebracht werden kann. Dieser Massage-Zusatzteil ist über einen Steckverschluss am Griff gelagert und weist auswechselbare Walzenrollen oder Rädchen zur Massage des Zahnfleisches auf. Durch das Vorsehen dieses zusätzlichen Massageteils ergibt sich jedoch eine verhältnismäßig aufwendige, teure Konstruktion, die weiters zufolge der beweglichen Elemente störungsanfällig ist, und überdies ist ein relativ scharfer Übergang zwischen dem Griff und dem Massageteil die Folge, wodurch Verletzungen im Zahnfleischbereich bzw. inneren Lippen- und Wangenbereich auftreten können.

Ein Ziel der Erfindung ist es, eine Zahnbürste der eingangs angeführten Art zu schaffen, die einfach herzustellen ist und die einen Massageteil aufweist, durch den Verletzungsgefahren im Zahnfleischbereich sowie im inneren Lippen- und Wangenbereich vorgebeugt werden kann.

Weiters ist es ein Ziel der Erfindung, eine Zahnbürste vorzusehen, die einen Massageteil hat, der besonders gut dafür geeignet ist, in den Zwischenraum zwischen Zahnfleisch und Lippe bzw. Wange eingeführt zu werden.

Bei der erfindungsgemäßen Zahnbürste ist der Massageteil einstückig mit dem Griff, und er weist die Form eines zumindest teilweise konvexen Körpers auf. Der Körper kann dabei ballig, teilweise abgeflacht, ausgeführt sein, und er kann auch texturiert sein, um die Massagewirkung zu verbessern. Unter "texturiert" ist dabei eine mit Erhebungen versehene, raue, geriefte oder dergl. profilierte Oberfläche zu verstehen.

Durch die einstückige Gestaltung des Massageteils mit dem Griff kann ein zumindest im Wesentlichen kontinuierlicher, spaltfreier Übergang zwischen dem Griff und dem Massageteil geschaffen werden, der die Verletzungsgefahr im Zahnfleischbereich sowie im inneren Lippen- und Wangenbereich reduziert; hierzu trägt die Form eines zumindest teilweise konvexen Körpers (z.B. kugel-, kugelsegment-, ei-, paraboloid-, ellipsoid- oder aber auch zungenförmig) bei, da hierdurch scharfe Kanten bzw. Ecken vermieden werden, durch welche möglicherweise Verletzungen von einem ungeübten Benutzer der Zahnbürste hervorgerufen werden könnten. Insbesondere wird hierdurch eine für Kinder geeignete Zahnbürste erhalten, welche von Kindern bedenkenlos angewendet werden kann, da auch bei noch nicht geschulter Handhabung der Zahnbürste das Verletzungsrisiko im Zahnfleischbereich sowie im inneren Lippen- und Wangenbereich durch die angegebene Gestaltung des Massageteils minimiert wird. Außerdem ist es auch möglich, den Massageteil außer zur Massage auch als Zungenschaber zur Zungenreinigung zu verwenden. Ein weiterer nicht unerheblicher Vorteil der einstückigen Ausbildung ist, dass durch die kontinuierliche, spaltfreie Verbindung eine einfache, zuverlässige Reinigung möglich ist, so dass eine hygienisch vorteilhafte Zahnbürste mit Massageteil erhalten wird, bei der wirksam Infektionen vorgebeugt werden kann.

Um einerseits eine relativ große Massagefläche zu erhalten, andererseits den Massageteil relativ flach zu gestalten, und um ein einfaches und angenehmes Einführen des Massageteils zwischen Lippe bzw. Wange und dem Zahnfleisch zu ermöglichen, ist es vorteilhaft, wenn der Massageteil im Querschnitt im Wesentlichen elliptisch ist.

Um beim Massieren des Zahnfleisches mit dem Massage-Element einen Beruhigungseffekt zu erzielen, insbesondere um Schmerzen durch entzündetes Zahnfleisch während des Zahnens bei Kleinkindern zu lindern, ist es vorteilhaft, wenn der Massageteil vorspringende, z.B. noppenartige Massage-Elemente aufweist. Dabei ist es auch von Vorteil, wenn die vorspringenden Massage-Elemente oder allgemein Texturen auf der Vorder- und Rückseite verschieden ausgebildet sind.

Wenn der Massageteil vorspringende Massage-Elemente aufweist, die im Wesentlichen linear sind und im Wesentlichen senkrecht zur Längsachse der Zahnbürste verlaufen, kann in den Bereichen zwischen den linearen Massage-Elementen ein Zahngel eingelagert werden, das danach mit Hilfe des Massageteils in das Zahnfleisch einmassiert werden kann. Insbesondere ist dies auch zur Schmerzlinderung beim Zahnen von Kleinkindern vorteilhaft, wobei bisher üblicherweise die Eltern zur Schmerzlinderung ein Zahngel mit den Fingern auftragen müssen; dadurch können wiederum Keime übertragen oder geringfügige Verletzungen durch die Fingernägel hervorgerufen werden.

Für einen stufenlosen, kontinuierlichen Übergang vom Griff zum Massageteil und hinsichtlich einer guten Handhabbarkeit der Zahnbürste ist es von Vorteil, wenn der Griff zumindest auf einem Teil seiner Länge im Querschnitt im Wesentlichen elliptisch ist.

Für eine weitere Verbesserung der Greifbarkeit der Zahnbürste ist es günstig, wenn der Griff zumindest auf einem Teil seiner Länge verjüngte und erweiterte Teilbereiche aufweist. Hierdurch entstehen durch die verjüngten Teilbereiche zwischen den erweiterten Teilbereichen Mulden, in welchen die Finger beim Benutzen der Zahnbürste zu liegen kommen, wobei ein Verrutschen der Finger in der Längsrichtung der Zahnbürste vermieden wird.

Um möglichst scharfe Kanten am Griff zu vermeiden, welche den Bedienungskomfort der Zahnbürste wesentlich reduzieren würden, ist es günstig, wenn kontinuierliche Übergänge zwischen den verjüngten und erweiterten Teilbereichen des Griffs vorgesehen sind.

Wenn die erweiterten Teilbereiche des Griffs jeweils zumindest zwei vorspringende Griffnoppen aufweisen, kann die Gefahr eines Verrutschens des Griffs in der Hand in Längs- und Radialrichtung der Zahnbürste weiter reduziert werden.

Bei einem bevorzugten Ausführungsbeispiel der Erfindung, bei dem der letzte erweiterte Teilbereich des Griffs der Massageteil ist, ergibt sich eine besonders kompakte ästhetische Zahnbürste, bei welcher der Übergang vom Griff in den Massageteil fließend verläuft.

Zum Erhöhen der Torsionssteifigkeit der Zahnbürste im Bereich des Borstenteils ist es von Vorteil, wenn der Griff einen im Querschnitt im Wesentlichen rechteckigen Halsteil aufweist, an den der Borstenteil anschließt. Der im Querschnitt im Wesentlichen rechteckige Halsteil weist zweckmäßigerweise abgerundete Eckbereiche auf, so dass insbesondere im Übergangsbereich zu dem im Querschnitt im Wesentlichen elliptischen Griffteil mittels stark abgerundeter Ecken ein stetiger, stufenloser Übergang erfolgt.

Um eine gemeinsame Handhabung der Zahnbürste von einem Kind und einem Erwachsenen zu ermöglichen, um so dem Kind zu helfen, die richtigen Bewegungen zu erlernen, ist es von Vorteil, wenn der Griff einen Verlängerungsteil aufweist, an den der Massageteil anschließt. Hierdurch kann der Erwachsene den als Führung dienenden Verlängerungsteil erfassen, während das Kind die Zahnbürste am restlichen Griff umfasst, wodurch dem Kind auf einfache Weise die richtige Bewegung zum Putzen der Zähne beigebracht werden kann.

Um die Festigkeit des Griffs bzw. seines Halsteils beim Anpressen des Borstenteils auf dem Zahnfleisch bzw. den Zähnen gut steuern zu können, ist es vorteilhaft, wenn der Griff aus Kunststoff als Mehrkomponenten-Material gespritzt ist. Dadurch kann auch eine gerade für Kinder interessante, ansprechende mehrfarbige Gestaltung erzielt werden.

Wenn die Material-Komponenten des Griffs unterschiedliche Elastizitätsmodule aufweisen, ergibt sich nicht nur eine optisch ansprechende Zahnbürste, welche aufgrund der mehreren Komponenten auf einfache Weise mehrere Farben aufweisen kann, sondern die Zahnbürste kann auch entsprechend den Anforderungen beim Putzvorgang unterschiedliche Steifigkeiten in verschiedenen Teilbereichen aufweisen.

Insbesondere ist es günstig, wenn das Massage-Element und der Griff sowie Verbindungsstege zwischen diesen aus einer Kunststoff-Komponente mit einem niedrigeren Elastizitätsmodul, und die übrigen Teile der Zahnbürste, gegebenenfalls der Halsteil und der Verlängerungsteil, aus einer Kunststoff-Komponente mit einem höheren Elastizitätsmodul bestehen. Hierdurch kann ein Nachgeben des Halsteils bei einem relativ starken Druck an das Zahnfleisch erreicht werden, wodurch Verletzungen durch die Borsten im Zahnfleischbereich vermieden werden, und andererseits ein gegenüber den Borsten relativ harter Massageteil erhalten werden, der insbesondere zur Linderung von Schmerzen beim Zahnen von Kleinkindern geeignet ist.

Die Erfindung wird nachstehend anhand von in der Zeichnung dargestellten bevorzugten Ausführungsbeispielen, auf die sie jedoch nicht beschränkt sein soll, noch weiter erläutert. Im Einzelnen zeigen in der Zeichnung:
Fig.1 eine Ansicht der Rückseite einer Zahnbürste;
Fig.2 einen Querschnitt des Halsteils der Zahnbürste gemäß der Linie II-II in Fig.1;
Fig.3 eine Seitenansicht dieser Zahnbürste;
Fig.4a einen Querschnitt gemäß der Linie IVa-IVa in Fig.3;
Fig.4b einen Querschnitt gemäß der Linie IVb-IVb in Fig.3;
Fig.5 eine Ansicht der Vorderseite der Zahnbürste gemäß den Figuren 1 und 3;
Fig.6 eine Ansicht der Rückseite einer zumindest derzeit als besonders bevorzugt angesehenen Zahnbürste mit einem Verlängerungsteil;
Fig.7 eine Seitenansicht der Zahnbürste gemäß Fig.6; und
Fig.8 eine Ansicht einer Vorderseite einer Zahnbürste mit länglichen vorspringenden Massage-Elementen am Massageteil.

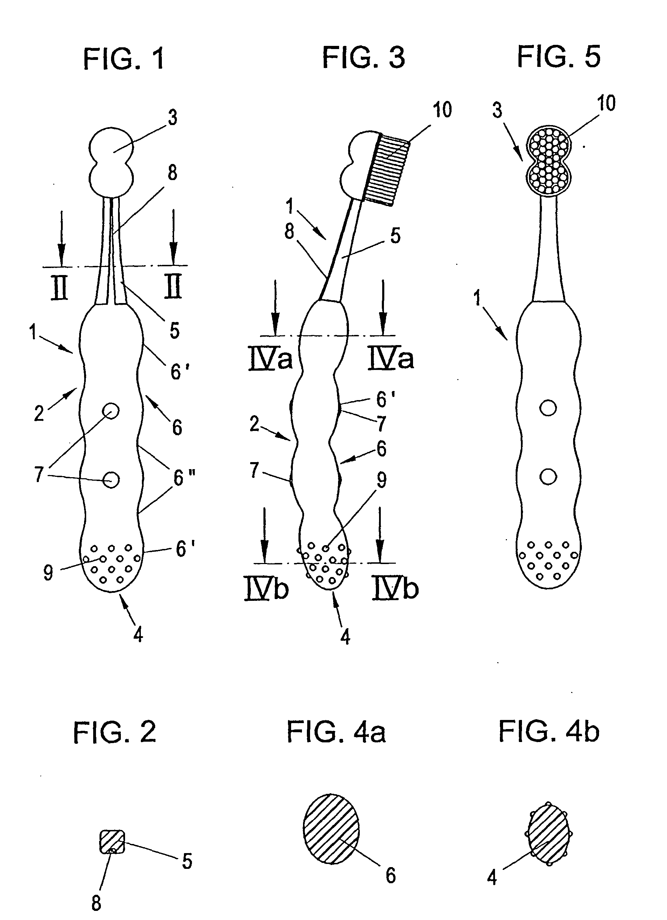

In Fig.1 bis 5 ist eine Zahnbürste 1 mit einem Griff oder Stiel 2 gezeigt, wobei in einem Endbereich des Griffs 2 ein Borstenteil 3, und in dem dem Borstenteil 3 gegenüberliegenden Endbereich ein Massageteil 4 vorgesehen ist. Der Griff 2 weist einen Halsteil 5 und einen eigentlichen Griffteil 6 auf.

Im Griffteil 6 sind erweiterte Teilbereiche 6' und verjüngte Teilbereiche 6'' vorgesehen, die kontinuierlich ineinander übergehen, wodurch sich eine Art wellenförmiges Griffprofil ergibt, welches ein Verrutschen der Zahnbürste 1 in der Hand in Längsrichtung erschwert. Um zusätzlich die Gefahr eines ungewollten Verrutschens und insbesondere Verdrehens der Zahnbürste 1 zu reduzieren, können in den erweiterten Teilbereichen 6' Griffnoppen 7 vorgesehen sein, wobei insbesondere in jedem Teilbereich an den Breitseiten des im Querschnitt im Wesentlichen elliptischen Griffteils 6 derartige Griffnoppen 7 vorgesehen sein können.

Der Halsteil 5 kann zur Versteifung aus einem anderen steiferen Kunststoffmaterial als der Griffteil 6 und Borstenteil 3 bestehen, wobei ein Verbindungssteg 8 vom Griffteil 6 zum Borstenteil 3 verlaufen kann, der aus demselben Material wie der Griffteil 6 besteht.

Der Griff 2 mit dem Borstenteil 3 und dem Massageteil 4 kann beispielsweise aus einem Zweikomponenten-Kunststoff gespritzt sein, wodurch auch eine optisch attraktive Erscheinung durch eine zweifärbige Gestaltung ermöglicht wird. Außerdem können die beiden Material-Komponenten unterschiedliche Materialsteifigkeiten aufweisen, wodurch insbesondere der Griffteil 6, der Verbindungssteg 8 sowie der Borstenteil 3 und der Massageteil 4 aus einem weicheren Material bestehen können als der Halsteil 5, wie z.B. aus einem Thermoplast-Elastomer, wie etwa Polypropylen.

Der Massageteil 4, welcher bei dem in Fig.1 bis 5 gezeigten Ausführungsbeispiel direkt vom letzten erweiterten Teilbereich 6' gebildet ist, ist hier als zur Gänze balliger Körper, d.h. als konvex gewölbter Teil, einstückig mit dem Griff 2 geformt und weist auf seiner gesamten Oberfläche eine Textur in Form von vorspringenden noppenartigen Massage-Elementen 9 auf (vgl. auch Fig.4b), welche dazu dienen, das vom Zahnen entzündete Zahnfleisch eines Kleinkindes zu beruhigen. Um scharfen Kanten bzw. Ecken im Übergangsbereich des Massage-Elements 4 zum Griff 2 und am Massage-Element 4 selbst zu vermeiden, weist dieses im Wesentlichen die Form eines Ellipsoids auf (vgl. auch Fig.4b) und schließt kontinuierlich, ohne Stufen, an den Griff 2 an. Selbstverständlich kann der Massageteil 4 auch die Form anderer gewölbter Körper bzw. von Teilen davon aufweisen, wie z.B. Kugelsegment, Paraboloid usw.

Aus Fig.2 ist ersichtlich, dass der Halsteil 5 im Querschnitt im Wesentlichen rechteckig ist, wobei jedoch die Ecken der rechteckigen Grundform stark abgerundet sind. Insbesondere weist die rechteckige Querschnittsform des Halsteils 5, welche zur Erhöhung der Torsionssteifigkeit des Halsteils 5 vorgesehen ist, immer stärker werdende Abrundungen der Ecken zum Griffteil 6 hin auf, wodurch ein kontinuierlicher Übergang zur aus Fig.4a ersichtlichen elliptischen Querschnittsform des Griffteils 6 erreicht wird.

In Fig.3 sind die am Borstenteil 3 angebrachten Borsten 10 zum Reinigen der Zähne und zum Massieren des Zahnfleisches erkennbar. Weiters ist ersichtlich, dass die Griffnoppen 7 in den erweiterten Teilbereichen 6' des Griffteils 6 an beiden Breitseiten vorgesehen sind.

Durch die im Querschnitt im Wesentlichen elliptische Form des Griffteils 6 (s. Fig.4a) ist eine äußerst handliche Gestalt des Griffteils 6 gegeben und darüber hinaus ein stufenloser Übergang zum Massageteil 4 (s. Fig.4b) möglich. Aufgrund der ellipsoiden Form des Massageteils 4 lässt sich dieser sehr einfach in den Zwischenraum zwischen Lippe bzw. Wange und Zahnfleisch einführen, und aufgrund der kantenlosen Form wird das Verletzungsrisiko insbesondere bei ungeübten Kleinkindern stark reduziert, und überdies eine hygienisch einwandfreie, leicht zu reinigende Ausbildung erhalten.

Die in Fig.5 gezeigten Borsten 10 des Borstenteils 3 können vielfärbig sein, um ein buntes attraktives Erscheinungsbild für die bevorzugten Benutzer der Zahnbürste, nämlich Kleinkinder, zu erreichen.

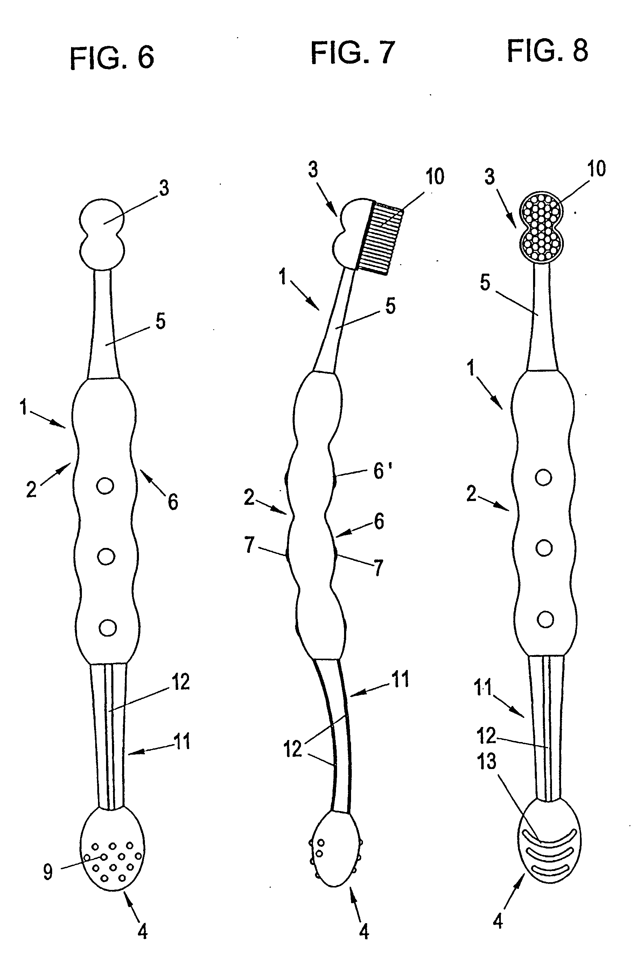

Bei dem in den Figuren 6 und 7 dargestellten, für bereits etwas größere Kinder gedachten Ausführungsbeispiel der erfindungsgemäßen Zahnbürste 1 ist ein Verlängerungsteil 11 vorgesehen, der es einem Erwachsenen ermöglichen soll, die Bewegungen der Zahnbürste 1 seitens des Kindes zu steuern, wenn das Kind die Zahnbürste 1 am Griffteil 6 erfasst, um es so dem Kind leicht zu machen, die für das Zähneputzen zweckmäßigen Bewegungen zu erlernen. Der Verlängerungsteil 11 kann im Fall einer Zweikomponenten-Fertigung im Spritzguss, wie erwähnt, aus einem steiferen Kunststoffmaterial bestehen, wobei Verbindungsstege 12 aus dem weicheren Kunststoff-Material vom Griffteil 6 zum Massageteil 4 verlaufen.

An den Verlängerungsteil 11 schließt einstückig wiederum der im Wesentlichen ellipsoide Massageteil 4 an, der texturiert ist und dabei mehrere Massage-Elemente 9 in Form von vorspringenden Noppen aufweist.

Wie insbesondere aus Fig.7 ersichtlich, sind wiederum an den Breitseiten der erweiterten Teilbereiche 6' des Griffteils 6 jeweils Griffnoppen 7 vorgesehen, um die Gefahr eines Verrutschens der Zahnbürste 1 zu verringern und somit dem den Griffteil 6 erfassenden Kind einen erhöhten Handhabungskomfort zu bieten.

In Fig.8 ist eine Frontalansicht einer gegenüber den Figuren 6 und 7 etwas modifizierten Ausführungsform der Zahnbürste 1 gezeigt, bei der als Massage-Elemente längliche, quer zur Längsrichtung der Zahnbürste verlaufende, erhabene Stege 13 am Massageteil 4 vorgesehen sind; diese Stege 13 sind besonders gut geeignet, um in den Zwischenräumen zwischen ihnen ein Zahngel aufzubringen, dass danach mit Hilfe der Zahnbürste 1 auf das entzündete Zahnfleisch eines zahnenden Kleinkindes aufgebracht werden kann. Selbstverständlich kann aber ein Zahngel auch bei den Ausführungsformen mit den noppenförmigen Massage-Elementen 9 aufgebracht werden. Besonders bevorzugt wird es im Übrigen, wenn an den beiden Seiten der Zahnbürste 1, wie sie aus Fig.6 einerseits (Rückseite) und aus Fig.8 andererseits (Vorderseite) ersichtlich sind, verschiedene Texturen bzw. Massage-Elemente, z.B. die Elemente 9 bzw. 13, vorgesehen sind.

Bei den Zahnbürsten 1 gemäß Fig.6 bis 8 kann ferner wiederum der Halsteil 5, gegebenenfalls zusammen mit dem Borstenteil 3, aus einem etwas härteren Kunststoff bestehen. Anstattdessen wäre aber auch selbstverständlich eine Herstellung aus einem einzigen Kunststoffmaterial denkbar.

## Patentansprüche

1. Zahnbürste (1) mit einem Griff (2) aus Kunststoff, an dessen einem Ende ein Borstenteil (3) zum Reinigen der Zähne und an dessen dem Borstenteil (3) gegenüberliegenden Ende ein Massageteil (4) vorgesehen ist, wobei der Massageteil (4) einstückig mit dem Griff (2) ist und im Wesentlichen die Form eines zumindest teilweise konvexen Körpers aufweist, **dadurch gekennzeichnet, dass** der Griff (2), der einen Halsteil (5) und einen Griffteil (6) aufweist, aus einem Mehrkomponenten-Material gespritzt ist und die Material-Komponenten des Griffs (2) unterschiedliche Elastizitätsmodule aufweisen, wobei der Massageteil (4) im Vergleich mit dem Halsteil (5) aus der Material-Komponente mit dem niedrigeren Elastizitätsmodul besteht.

2. Zahnbürste nach Anspruch 1, **dadurch gekennzeichnet, dass** der Massageteil (4) im Querschnitt im Wesentlichen elliptisch ist.

3. Zahnbürste nach Anspruch 1 oder 2, **dadurch gekennzeichnet, dass** der Massageteil (4) texturiert ist.

4. Zahnbürste nach einem der Ansprüche 1 bis 3, **dadurch gekennzeichnet, dass** der Massageteil (4) vorspringende Massage-Elemente (9) aufweist.

5. Zahnbürste nach Anspruch 4, **dadurch gekennzeichnet, dass** die Massage-Elemente (9) noppenartig ausgebildet sind.

6. Zahnbürste nach Anspruch 4, **dadurch gekennzeichnet, dass** der Massageteil (4) im Wesentlichen linear verlaufende vorspringende Massage-Elemente (9) aufweist, die in einer Ebene im Wesentlichen senkrecht zur Längsachse der Zahnbürste (1) verlaufen.

7. Zahnbürste nach einem der Ansprüche 1 bis 6, **dadurch gekennzeichnet, dass** der Massageteil (4) verschiedene Seiten mit verschiedenen Massage-Elementen (9) hat.

8. Zahnbürste nach einem der Ansprüche 1 bis 7, **dadurch gekennzeichnet, dass** der Griff (2) zumindest auf einem Teil seiner Länge im Querschnitt im Wesentlichen elliptisch ist.

9. Zahnbürste nach einem der Ansprüche 1 bis 8, **dadurch gekennzeichnet, dass** der Griff (2) zumindest auf einem Teil seiner Länge verjüngte und erweiterte Teilbereiche (6'', 6') aufweist.

10. Zahnbürste nach Anspruch 9, **dadurch gekennzeichnet, dass** kontinuierliche Übergänge zwischen den verjüngten und erweiterten Teilbereichen (6'', 6') des Griffs (2) vorgesehen sind.

11. Zahnbürste nach Anspruch 9 oder 10, **dadurch gekennzeichnet, dass** die erweiterten Teilbereiche (6') des Griffs (2) jeweils zumindest zwei vorspringende Griffnoppen (7) aufweisen.

12. Zahnbürste nach einem der Ansprüche 9 bis 11, **dadurch gekennzeichnet, dass** der letzte erweiterte Teilbereich (6') des Griffs (2) der Massageteil (4) ist.

13. Zahnbürste nach einem der Ansprüche 1 bis 12, **dadurch gekennzeichnet, dass** der Griff (2) einen im Querschnitt im Wesentlichen rechteckigen Halsteil (5) aufweist, an den der Borstenteil (3) anschließt.

14. Zahnbürste nach einem der Ansprüche 1 bis 13, **dadurch gekennzeichnet, dass** der Griff (2) einen Verlängerungsteil (11) aufweist, an den der Massageteil (4) anschließt.

15. Zahnbürste nach Anspruch 14, **dadurch gekennzeichnet, dass** das Massage-Element (4) und der Griff (2) sowie Verbindungsstege (8, 12) aus einer Kunststoff-Komponente mit einem niedrigeren Elastizitätsmodul und die übrigen Teile der Zahnbürste (1) aus einer Kunststoff-Komponente mit einem höheren Elastizitätsmodul bestehen.

16. Zahnbürste nach Anspruch 15, **dadurch gekennzeichnet, dass** auch der Halsteil (5) und der Verlängerungsteil (11) aus der Kunststoff-Komponente mit dem höheren Elastizitätsmodul bestehen.

## Claims

1. A toothbrush (1) comprising a handle (2) made of a plastic material, wherein a bristle portion (3) for cleaning teeth is provided at one end of said handle, and a massaging portion (4) is provided at an end located opposite the bristle portion (3), said massaging portion (4) being formed integral with said handle (2) and having substantially the shape of an at least partially convex body, **characterised in that** the handle (2), which has a neck portion (5) and a grip portion (6), is injection-moulded of a multi-component material, and **in that** the material components of the handle (2) have different moduli of elasticity, the massaging portion (4) consisting of the material component having the lower modulus of elasticity as compared to the neck portion (5).

2. A toothbrush according to claim 1, **characterised in that** the massaging portion (4) has a substantially elliptical cross-section.

3. A toothbrush according to claim 1 or 2, **characterised in that** the massaging portion (4) is textured.

4. A toothbrush according to any one of claims 1 to 3, **characterised in that** the massaging portion (4) comprises projecting massaging elements (9).

5. A toothbrush according to claim 4, **characterised in that** the massaging elements (9) are knob-shaped.

6. A toothbrush according to claim 4, **characterised in that** the massaging portion (4) comprises substantially linearly extending projecting massaging elements (9) extending in a plane substantially perpendicular to the longitudinal axis of said toothbrush (1).

7. A toothbrush according to any one of claims 1 to 6, **characterised in that** the massaging portion (4) has different sides with different massaging elements (9).

8. A toothbrush according to any one of claims 1 to 7, **characterised in that** the handle (2) has a substantially elliptical cross-section at least over part of its longitudinal extension.

9. A toothbrush according to any one of claims 1 to 8, **characterised in that** the handle (2) comprises narrowed and widened partial regions (6'', 6') over at least part of its longitudinal extension.

10. A toothbrush according to claim 9, **characterised in that** continuous transitions are provided between said narrowed and said widened partial regions (6", 6') of the handle (2).

11. A toothbrush according to claim 9 or 10, **characterised in that** the widened partial regions (6') of the handle (2) each comprise at least two projecting gripping knobs (7).

12. A toothbrush according to any one of claims 9 to 11, **characterised in that** the last widened partial region (6') of the handle (2) constitutes the massaging portion (4).

13. A toothbrush according to any one of claims 1 to 12, **characterised in that** the handle (2) comprises a neck portion (5) of substantially rectangular cross-section, which neck portion is followed by the bristle portion (3).

14. A toothbrush according to any one of claims 1 to 13, **characterised in that** the handle (2) comprises an extension portion (11), which extension portion is followed by the massaging portion (4).

15. A toothbrush according to claim 14, **characterised in that** the massaging element (4) and the handle (2) as well as connecting webs (8, 12) are made of a plastic component having a lower modulus of elasticity, and the remaining portions of the toothbrush (1) are made of a plastic component having a higher modulus of elasticity.

16. A toothbrush according to claim 15, **characterised in that** also the neck portion (5) and the extension portion (11) are made of the plastic component having the higher modulus of elasticity.

## Revendications

1. Brosse à dents (1) avec un manche (2) en matière plastique, à une extrémité duquel est prévue une partie dotée de poils (3) pour le nettoyage des dents et à l'extrémité opposée à la partie dotée de poils (3) duquel est prévue une partie destinée au massage (4), sachant que la partie destinée au massage (4) est réalisée d'une pièce avec le manche (2) et présente essentiellement la forme d'un corps au moins partiellement convexe, **caractérisée en ce que** le manche (2) qui comporte une partie col(5) et un élément de préhension (6), est moulé par injection à partir d'une matière à composants multiples et les composants de matière du manche (2) comportent différents modules d'élasticité, la partie destinée au massage (4) se composant du composant de matière doté du plus faible module d'élasticité comparativement à la partie col (5).

2. Brosse à dents selon la revendication 1, **caractérisée en ce que** la partie destinée au massage (4) est essentiellement elliptique vue en coupe.

3. Brosse à dents selon la revendication 1 ou 2, **caractérisée en ce que** la partie destinée au massage (4) est texturée.

4. Brosse à dents selon l'une des revendications 1 à 3, **caractérisée en ce que** la partie destinée au massage (4) comporte des éléments saillants de massage (9).

5. Brosse à dents selon la revendication 4, **caractérisée en ce que** les éléments de massage (9) sont réalisés de manière semblable à des nopes.

6. Brosse à dents selon la revendication 4, **caractérisée en ce que** la partie destinée au massage (4) comporte essentiellement des éléments saillants de massage (9) linéaires, lesquels dans un plan sont essentiellement perpendiculaires à l'axe longitudinal de la brosse à dents (1).

7. Brosse à dents selon l'une des revendications 1 à 6, **caractérisée en ce que** la partie destinée au massage (4) a différentes faces pourvues d'éléments distincts de massage (9).

8. Brosse à dents selon l'une des revendications 1 à 7, **caractérisée en ce que** le manche (2) est essentiellement elliptique vu en coupe, du moins sur une partie de sa longueur.

9. Brosse à dents selon l'une des revendications 1 à 8, **caractérisée en ce que** le manche (2) comporte au moins sur une partie de sa longueur des zones partielles (6", 6') effilées et élargies.

10. Brosse à dents selon la revendication 9, **caractérisée en ce que** des passages continus sont prévus entre les zones partielles (6", 6') effilées et élargies du manche (2).

11. Brosse à dents selon la revendication 9 ou 10, **caractérisée en ce que** les zones partielles élargies (6') du manche (2) comportent respectivement au moins deux nopes saillantes de préhension (7).

12. Brosse à dents selon l'une des revendications 9 à 11, **caractérisée en ce que** la dernière zone partielle élargie (6') du manche (2) carrespond à la partie destinée au massage (4).

13. Brosse à dents selon l'une des revendications 1 à 12, **caractérisée en ce que** le manche (2) comporte une partie col (5) essentiellement rectangulaire vue en coupe, à laquelle la partie dotée de poils (3) est contiguë.

14. Brosse à dents selon l'une des revendications 1 à 13, **caractérisée en ce que** le manche (2) comporte une pièce de rallonge (11) à laquelle la partie destinée au massage (4) est contiguë.

15. Brosse à dents selon la revendication 14, **caractérisée en ce que** l'élément destiné au massage (4) et le manche (2), ainsi que les traverses de liaison (8, 12) sont constitués d'un composant en matière plastique doté d'un plus faible module d'élasticité et que les autres éléments de la brosse à dents (1) se composent d'un composant en matière plastique avec un module d'élasticité plus élevé.

16. Brosse à dents selon la revendication 15, **caractérisée en ce que** la partie col (5) et la pièce de rallonge (11) se composent également du composant en matière plastique au module d'élasticité plus élevé.
